# EUROPEAN PATENT APPLICATION

(11) **EP 4 498 554 A1**
(43) Date of publication of application: **29.01.2025**
(21) Application number: 24188398.2
(22) Date of filing: 12.07.2024
(51) Int. Cl.: H02J 1/10, B25F 5/00, H02J 7/00, H02J 7/02

(54) **POWER EQUIPMENT WITH HYBRID POWER SUPPLY**

(30) Priority: 26.07.2023 US 202318359536
(71) Applicant: Robert Bosch GmbH, 70442 Stuttgart (DE)
(72) Inventor: Zhang, Yizhuo, Arlington Heights, IL 60004 (US); Lewton, Robert, Arlington Heights, IL 60004 (US)

(57) **Abstract**

A hybrid power supply for power equipment or a power tool is disclosed. The hybrid power supply is advantageously configured to operate in several different operating modes depending on the performance or power requirement of the equipment or tool, as well as depending on whether AC power is available. Particularly, the hybrid power supply enables the equipment or tool to operate using battery power, battery power, or both. Additionally, the hybrid power supply enables charging of attached batteries and enables providing power to an AC accessory connected to the equipment or tool.

## Description

### FIELD

The device and method disclosed in this document relates to power supplies and, more particularly, to a hybrid power supply for power equipment.

### BACKGROUND

Unless otherwise indicated herein, the materials described in this section are not admitted to be the prior art by inclusion in this section.

Conventional power tools and other power equipment incorporate a variety of power sources depending on their specific requirements. For example, some equipment is battery-powered (i.e., cordless) and receives power via a battery, which is generally rechargeable or replaceable. Battery-powered equipment provides greater mobility and flexibility, but runtime and maximum power output is limited by the capacity and output of the battery. For equipment that requires less mobility, it is common to receive power via a cord connected to a standard electrical outlet or other alternating-current (AC) power source. Corded equipment can thus be provided with continuous power, so long as it is sufficiently near the AC power source. However, even corded equipment has a maximum power output that may be enforced by a circuit breaker.

Common alternatives to battery-powered equipment, where higher power and mobility are required include gasoline-powered equipment that incorporates a small gasoline engine. Gasoline-powered equipment provide higher power, while maintaining some level of mobility. Common alternatives to stationary corded equipment where very high power is required include pneumatic and hydraulic equipment. Such equipment is useful in heavy duty and industrial applications. However, gasoline, pneumatic, and hydraulic equipment are often more challenging to operate and more expensive to maintain compared to electric equipment, particular for typical consumers and hobbyists.

What is needed is a power supply that provides the ease of use and maintenance of electric equipment, while flexibly providing mobility when it is need and very high power when it is needed.

### SUMMARY

A power supply for a device is disclosed. The power supply comprises a first direct-current (DC) bus having a first DC voltage. The device is configured to receive power from the first DC bus. The power supply further comprises first power electronics configured to provide power from an alternating-current (AC) power source to the first DC bus. The power supply further comprises a second DC bus having a second DC voltage. The second DC voltage is less than the first DC voltage. The power supply further comprises second power electronics configured to provide power from the second DC bus to the first DC bus. The power supply further comprises third power electronics configured to provide power from at least one battery pack to the second DC bus. The power supply further comprises a controller. The controller is configured to, in a first operating mode, operate the first power electronics to provide power from the AC power source to the first DC bus. At least one load of the device is provided with power from the first DC bus in the first operating mode. The controller is further configured to, in a second operating mode, operate the second power electronics and the third power electronics to provide power from the at least one battery pack to the first DC bus. At least one load of the device is provided with power from the first DC bus in the second operating mode.

A further power supply for a device is disclosed. The power supply comprises a direct-current (DC) bus having a first DC voltage. The device is configured to receive power from the DC bus. The power supply further comprises first power electronics configured to provide power from an alternating-current (AC) power source to the DC bus. The power supply comprises second power electronics configured to provide power from at least one battery pack to the DC bus. The power supply comprises a controller. The controller is configured to, in a first operating mode, operate the first power electronics to provide power from the AC power source to the DC bus. At least one load of the device is provided with power from the DC bus in the first operating mode. The controller is further configured to, in a second operating mode, operate the second power electronics to provide power from the at least one battery pack to the DC bus, at least one load of the device being provided with power from the DC bus in the second operating mode.

A power tool is disclosed. The power tool comprises an electric motor configured to drive a tool. The power tool further comprises a direct-current (DC) bus having a DC voltage. The electric motor is operably connected to receive power from the DC bus. The power tool further comprises first power electronics configured to provide power from an alternating-current (AC) power source to the DC bus. The power tool further comprises second power electronics configured to provide power from at least one battery pack to the second DC bus. The power tool further comprises a controller. The controller is configured to, in a first operating mode, operate the first power electronics to provide power from the AC power source to the DC bus. The electric motor is provided with power from the DC bus in the first operating mode. The controller is further configured to, in a second operating mode, operate the second power electronics to provide power from the at least one battery pack to the DC bus. The electric motor is provided with power from the DC bus in the second operating mode.

### BRIEF DESCRIPTION OF THE DRAWINGS

The foregoing aspects and other features of the hybrid power system are explained in the following description, taken in connection with the accompanying drawings.
FIG. 1 is a schematic drawing showing a piece of power equipment having a hybrid power supply.
FIG. 2 is a schematic drawing that illustrates an architecture of the hybrid power supply.
FIG. 3 is a schematic drawing that illustrates an alternative architecture for the hybrid power supply.

### DETAILED DESCRIPTION

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to one skilled in the art which this disclosure pertains.

### Overview

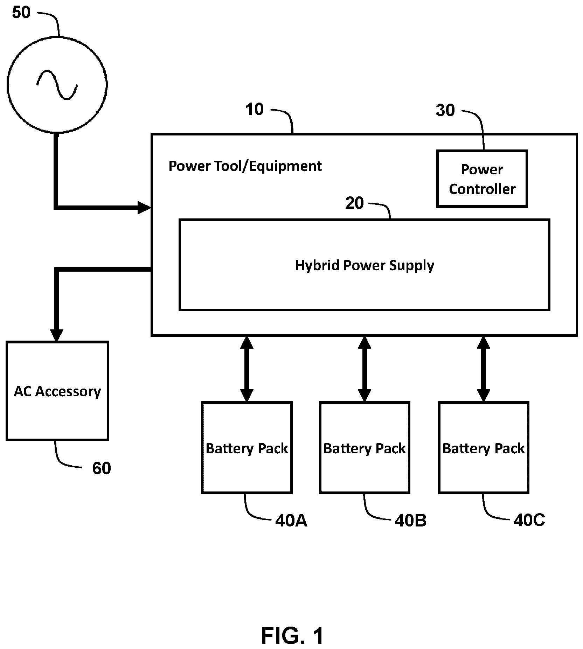

FIG. 1 is a schematic drawing showing a piece of power equipment 10 having a hybrid power supply 20. In some embodiments, the power equipment 10 may, for example, comprise a tabletop power tool such as a table saw, a band saw, a miter saw, a scroll saw, a drill press, a router table, a bench grinder, or a thickness planer. Likewise, the power equipment 10 may also include equivalent and related handheld power tools. In other embodiments, the power equipment 10 may, for example, comprise an outdoor power equipment, such as a lawnmower, a leaf blower, a snow blower, a chainsaw, or a pressure washer. In at least some embodiments, the hybrid power supply 20 is directly integrated with the power equipment 10, but may also be provided separately and discretely in some embodiments.

The hybrid power supply 20 is advantageously configured to operate in several different operating modes depending on the performance or power requirement of the power equipment, as well as depending on whether AC power is available. To this end, the power equipment 10 and/or the hybrid power supply 20 includes one or more controllers for operating power electronics of the hybrid power supply 20. In one embodiment, a power controller 30 is provided as a master controller and is configured to select which operating mode(s) the hybrid power supply 20 is to be operated in and operate the power electronics thereof according to the selected operating mode. It will be recognized by those of ordinary skill in the art that a "controller" includes any hardware system, hardware mechanism or hardware component that processes data, signals, or other information. Thus, the power controller 30 may include a system with a central processing unit, multiple processing units, dedicated circuitry for achieving specific functionality, or other systems.

In some embodiments, the power equipment 10 further includes a physical user interface, such as one or more buttons or switches, via which a user can manually set an operating mode of the hybrid power supply 20.

In a first operating mode of the hybrid power supply 20, the power equipment 10 is provided with power from an alternating-current (AC) power source 50 that is connected to the power equipment 10, e.g., via a power cord. In at least some embodiments, the AC power source 50 is a standard electrical outlet providing AC voltages between 110V-230V at a frequency between 50-60Hz. However, the AC power source 50 may comprise any external system that the power equipment 10 can connect with to receive AC power, such as a gasoline generator or another alternative power source. It should be appreciated that the first operating mode has the advantage of providing continuous and relatively high power. In some embodiments, the power controller 30 is configured to automatically switch the hybrid power supply 20 to the first operating mode in response to the power equipment 10 being activated while the hybrid power supply 20 is connected to the AC power source 50.

In a second operating mode of the hybrid power supply 20, the power equipment 10 is provided with power from at least one battery pack 40A, 40B, 40C. In at least some embodiments, each battery pack 40A-C is a rechargeable and discretely enclosed battery pack that is configured to connect with the battery connection interface. In at least some embodiments, each battery pack 40A-C is removably connected to the power equipment 10 via a battery connection interface (not shown). Each battery pack 40A-C is configured to provide a direct-current (DC) voltage, e.g., 18V or 36V. In some embodiments, the hybrid power supply 20 and the battery connection interface are configured to receive and operate with battery packs providing multiple different voltages and/or form factors. It should be appreciated that the second operating mode has the advantage of greater mobility and flexibility, but has a limited runtime and power output, compared to the first operating mode in which a nearby AC power source is required. In some embodiments, the power controller 30 is configured to automatically switch the hybrid power supply 20 to the second operating mode in response to the power equipment 10 being activated while the hybrid power supply 20 is disconnected from the AC power source 50. In at least some embodiments, in the second operating mode, the current draw from each battery pack 40A-C is optimized based on the load, the battery capacity, the battery temperature, etc., to maximize efficiency and thermal performance.

In a third operating mode of the hybrid power supply 20, the battery pack(s) 40A-C are provided with power from the AC power source 50 that is connected to the power equipment 10 and the battery pack(s) 40A-C are charged. It should be appreciated that the third operating mode can be usefully leveraged to recharge the battery pack(s) 40A-C when the power equipment 10 is connected to the AC power source 50, but is not currently being used itself. In some embodiments, the power controller 30 is configured to automatically switch the hybrid power supply 20 to the third operating mode in response to the power equipment 10 being deactivated (or otherwise not being used) while the hybrid power supply 20 being connected to the AC power source 50. In some embodiments, the power controller 30 is configured to cause the battery pack(s) 40A-C to be charged simultaneously, sequentially, or a combination of both, depending on how many batteries are connected to the system, a state of charge of each battery, or a load current limit or a load power limit associated with the AC power source 50, etc.

In a fourth operating mode of the hybrid power supply 20, an AC accessory 60 that is removably connected to the power equipment 10 is provided with AC power from the hybrid power supply 20, e.g., from the battery pack(s) 40A-C and/or the AC power source 50. The AC accessory 60 may be any device that is configured to receive and operate using AC power. In some embodiments, the AC accessory 60 may, for example, be a handheld power tool, such as a drill, a saw, a router, or a sander. In some embodiments, the AC accessory 60 is connected to the power equipment 10 and/or the hybrid power supply 20 via a standard electrical outlet (not shown) that is arranged on a housing of the power equipment 10. It should be appreciated that the fourth operating mode has the advantage of providing AC power to smaller accessory devices from the power equipment 10 when an AC power source is not nearby or when a sufficient number of electrical outlets is not available. In some embodiments, the power controller 30 is configured to automatically switch the hybrid power supply 20 to the fourth operating mode in response to the hybrid power supply 20 being connected to the AC accessory 60.

In a fifth operating mode of the hybrid power supply 20, the power equipment 10 is provided with power both from the AC power source 50 and from the battery pack(s) 40A-C, simultaneously. In this way, the power equipment 10 can be operated with the combined power output of the AC power source 50 and the battery pack(s) 40A-C. It should be appreciated that the fifth operating mode is advantageous when the power or performance requirement of the power equipment 10 would otherwise exceed the load limitations of the AC power source 50 alone, e.g., the load would trip a circuit breaker or blow a fuse. In some embodiments, the power controller 30 is configured to automatically switch the hybrid power supply 20 to the fifth operating mode in response to the hybrid power supply 20 being connected to the AC power source 50 and a power requirement (e.g., a load current or load power) of the power equipment 10 exceeding a predetermined threshold, e.g., a load current limit or a load power limit associated with the AC power source 50.

It should be appreciated that the operating modes of the hybrid power supply 20 that are described herein are not necessarily mutually exclusive of one another. In some cases, the hybrid power supply 20 is configured to operate in more than on operating mode at the same time. For example, in one embodiment, the hybrid power supply 20 is configured such that it can be operating the first operating mode or the second operating mode to provide power to operate the power equipment 10, while simultaneously operating in the fourth operating mode to provide power to the AC accessory 60.

### Hybrid Power Supply

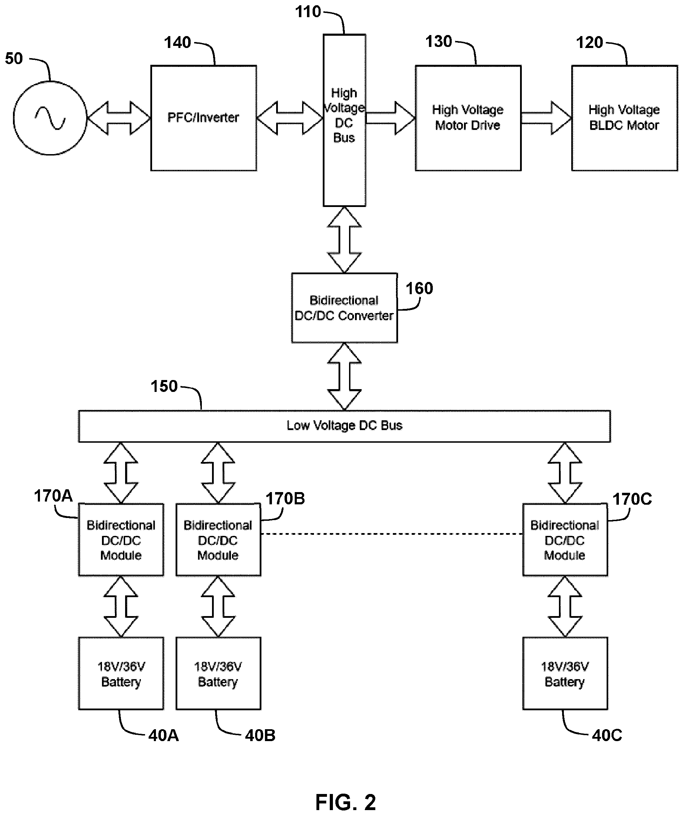

FIG. 2 is a schematic drawing that illustrates an architecture of the hybrid power supply 20. The hybrid power supply 20 comprises a variety of power electronics configured to achieve the functionalities described herein. Such power electronics may include arrangements of circuit components such as relays, contactors, diodes, solid-state switches, resistors, capacitors, and inductors, which are not described in detail herein.

The hybrid power supply 20 has a high voltage DC bus 110 configured to distribute power to high voltage loads in the power equipment 10. As will be appreciated from the descriptions below, the high voltage DC bus 110 can receive power either from the AC power source 50 or from the battery pack(s) 40A-C. In some embodiments, the high voltage DC bus 110 has a nominal voltage of 400 Volts.

In the illustrated embodiment, the high voltage loads include a high voltage brushless DC motor 120 of the power equipment 10. In at least some embodiments, the high voltage brushless DC motor 120 is configured to drive a tool, such as a drill bit, saw blade, or the like. The high voltage brushless DC motor 120 is operated by a high voltage motor drive 130 having power electronics configured to receive power from the high voltage DC bus 110 and apply suitable driving currents to high voltage brushless DC motor 120. It should be appreciated that the power equipment 10 may include a variety of other high voltage loads.

The hybrid power supply 20 further includes power electronics, in particular an AC/DC converter, configured to provide power from the AC power source 50 to the high voltage DC bus 110. In at least some embodiments, this AC/DC converter is configured to be operated as a bidirectional AC/DC converter 140. In a converter or rectifier mode of operation, the bidirectional AC/DC converter 140 is configured to provide power from the AC power source 50 to the high voltage DC bus 110 by converting an AC voltage of the AC power source 50 into the nominal voltage of the high voltage DC bus 110. In an inverter mode of operation, the bidirectional AC/DC converter 140 is configured to provide power from the high voltage DC bus 110 to the AC accessory 60 connected to the hybrid power supply 20 by converting the nominal voltage of the high voltage DC bus 110 from the high voltage DC bus 110 into an AC voltage for the AC accessory 60. In at least one embodiment, the bidirectional AC/DC converter 140 has a totem-pole power factor correction (PFC) topology.

The hybrid power supply 20 further includes a low voltage DC bus 150. As will be appreciated from the descriptions below, the low voltage DC bus 150 is an intermediate bus between the high voltage DC bus 110 and the battery pack(s) 40A-C. In some embodiments, the low voltage DC bus 150 has a nominal voltage that is less than the nominal voltage of the high voltage DC bus 110.

The hybrid power supply 20 further includes power electronics, in particular a DC/DC converter, configured to provide power from the low voltage DC bus 150 to the high voltage DC bus 110. In at least some embodiments, this DC/DC converter is a bidirectional DC/DC converter 160. In a step-up mode of operation, the bidirectional DC/DC converter 160 is configured to provide power from the low voltage DC bus 150 to the high voltage DC bus 110 by converting the nominal voltage of the low voltage DC bus 150 of the low voltage DC bus 150 into the nominal voltage of the high voltage DC bus 110 of the high voltage DC bus 110. In a step-down mode of operation, the bidirectional DC/DC converter 160 is configured to provide power from the high voltage DC bus 110 to the low voltage DC bus 150 by converting the nominal voltage of the high voltage DC bus 110 of the high voltage DC bus 110 into the nominal voltage of the low voltage DC bus 150 of the low voltage DC bus 150. In at least one embodiment, the bidirectional DC/DC converter 160 is electrically isolated from the high voltage DC bus 110 and the low voltage DC bus 150, for example by way of transformers.

The hybrid power supply 20 further includes power electronics, in particular respective DC/DC converters, each configured to provide power from a respective one of the battery packs 40A-C to the low voltage DC bus 150. In at least some embodiments, these DC/DC converters are bidirectional DC/DC converters 170A, 170B, 170C. In a discharge mode of operation, the DC/DC converters 170A-C are configured to provide power from the battery pack(s) 40A-C to the low voltage DC bus 150 by converting respective DC voltage(s) of the battery pack(s) 40A-C, e.g., 18V or 36V, into the nominal voltage of the low voltage DC bus 150. In a charge mode of operation, the DC/DC converters 170A-C are configured to provide power from the low voltage DC bus 150 to the battery pack(s) 40A-C by converting the nominal voltage of the low voltage DC bus 150 into the DC voltage necessary to charge each of the respective battery pack(s) 40A-C. In at least one embodiment, the DC/DC converters 170A-C are not electrically isolated.

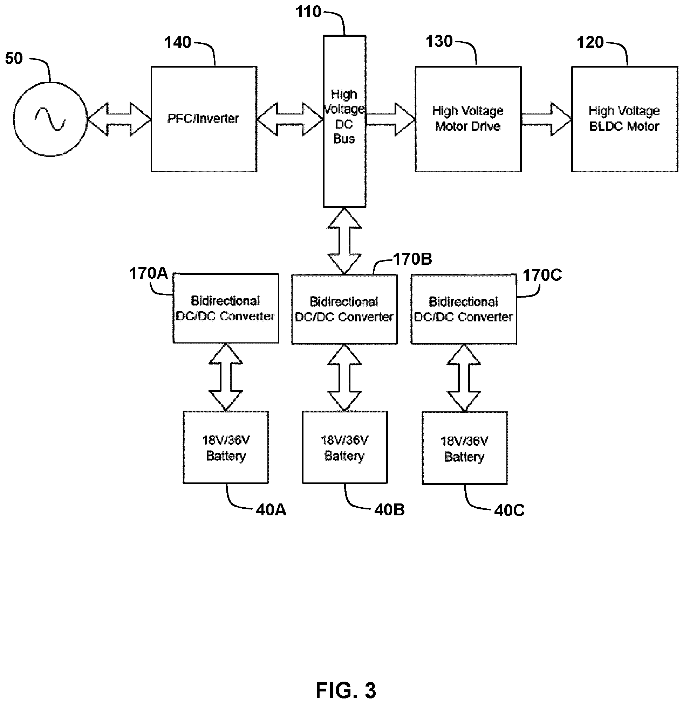

In an alternative embodiment, shown in FIG. 3, the low voltage DC bus 150 is omitted from the hybrid power supply 20. In this embodiment, the bidirectional DC/DC converters 170A, 170B, 170C connect directly to the high voltage DC bus 110. Thus, in the discharge mode of operation, the DC/DC converters 170A-C are instead configured to provide power from the battery pack(s) 40A-C to the high voltage DC bus 110 by converting respective DC voltage(s) of the battery pack(s) 40A-C, e.g., 18V or 36V, into the nominal voltage of the high voltage DC bus 110. Likewise, in the charge mode of operation, the DC/DC converters 170A-C are instead configured to provide power from the high voltage DC bus 110 to the battery pack(s) 40A-C by converting the nominal voltage of the high voltage DC bus 110 into the DC voltage necessary to charge each of the respective battery pack(s) 40A-C.

The power controller 30 is operably connected with the bidirectional AC/DC converter 140, bidirectional DC/DC converter 160, and the DC/DC converters 170A-C and is configured to operate these power electronics to enable the first, second, third, fourth, and fifth operating modes of the hybrid power supply 20. In some embodiments, the power controller 30 is a master controller and the hybrid power supply 20 includes respective slave controllers (not shown) in association with each of the bidirectional AC/DC converter 140, bidirectional DC/DC converter 160, and the DC/DC converters 170A-C, and the power controller 30 commands the slave controllers to operate the bidirectional AC/DC converter 140, bidirectional DC/DC converter 160, and the DC/DC converters 170A-C.

In the first operating mode, the power controller 30 is configured to operate the bidirectional AC/DC converter 140 to provide power from the AC power source 50 to the high voltage DC bus 110. In this first operating mode, the loads of the power equipment 10 are provided with power from the AC power source 50, via the high voltage DC bus 110. Particularly, in some embodiments, a further controller (not shown) is configured to operate the high voltage motor drive 130 to drive high voltage motor 120 using power from the high voltage DC bus 110.

In the second operating mode, the power controller 30 is configured to operate the DC/DC converter 160 and the DC/DC converters 170A-C to provide power from the battery pack(s) 40A-C to the high voltage DC bus 110. In this second operating mode, the loads of the power equipment 10 are provided with power from the battery pack(s) 40A-C, via the high voltage DC bus 110. Particularly, in some embodiments, the further controller (not shown) is configured to operate the high voltage motor drive 130 to drive high voltage motor 120 using power from the high voltage DC bus 110.

In the third operating mode, the power controller 30 is configured to operate the bidirectional AC/DC converter 140 and the DC/DC converter 160 to provide power from the AC power source 50 to the low voltage DC bus 150. Additionally, in the third operating mode, the power controller 30 is configured to operate the DC/DC converters 170A-C to charge the battery pack(s) 40A-C using power from the low voltage DC bus 150.

In the fourth operating mode, the power controller 30 is configured to operate the DC/DC converter 160 and the DC/DC converters 170A-C to provide power from the battery pack(s) 40A-C to the high voltage DC bus 110. Additionally, in the fourth operating mode, the power controller 30 is configured to operate the bidirectional AC/DC converter 140 as a DC/AC inverter to provide AC power from the high voltage DC bus 110 to the AC accessory 60 connected to the hybrid power supply 20.

In the fifth operating mode, the power controller 30 is configured to operate the bidirectional AC/DC converter 140 to provide power from the AC power source 50 to the high voltage DC bus 110. Simultaneously, in the fifth operating mode, the power controller 30 is configured to operate the DC/DC converter 160 and the DC/DC converters 170A-C to provide power from the battery pack(s) 40A-C to the high voltage DC bus 110. In this fifth operating mode, the loads of the power equipment 10 are provided with power from both the AC power source 50 and the battery pack(s) 40A-C, via the high voltage DC bus 110. Particularly, in some embodiments, the further controller (not shown) is configured to operate the high voltage motor drive 130 to drive high voltage motor 120 using power from the high voltage DC bus 110.

While the disclosure has been illustrated and described in detail in the drawings and foregoing description, the same should be considered as illustrative and not restrictive in character. It is understood that only the preferred embodiments have been presented and that all changes, modifications and further applications that come within the spirit of the disclosure are desired to be protected.

## Claims

1. A power supply for a device, the power supply comprising:
a first direct-current (DC) bus having a first DC voltage, the device being configured to receive power from the first DC bus;
first power electronics configured to provide power from an alternating-current (AC) power source to the first DC bus;
a second DC bus having a second DC voltage, the second DC voltage being less than the first DC voltage;
second power electronics configured to provide power from the second DC bus to the first DC bus;
third power electronics configured to provide power from at least one battery pack to the second DC bus; and
a controller configured to:
in a first operating mode, operate the first power electronics to provide power from the AC power source to the first DC bus, at least one load of the device being provided with power from the first DC bus in the first operating mode; and
in a second operating mode, operate the second power electronics and the third power electronics to provide power from the at least one battery pack to the first DC bus, at least one load of the device being provided with power from the first DC bus in the second operating mode.

2. The power supply according to claim 1, wherein the controller is configured to automatically switch to the first operating mode in response to the device being activated while the power supply is connected to the AC power source.

3. The power supply according to claim 1, wherein the controller is configured to automatically switch to the second operating mode in response to the device being activated while the power supply is disconnected from the AC power source.

4. The power supply according to claim 1, the controller being further configured to:
in a third operating mode, (i) operate the first power electronics and the second power electronics to provide power from the AC power source to the second DC bus and (ii) operate the third power electronics to charge the at least one battery pack from the second DC bus.

5. The power supply according to claim 4, wherein the controller is configured to automatically switch to the third operating mode in response to the device being deactivated while the power supply is connected to the AC power source.

6. The power supply according to claim 1, the controller being further configured to:
in a fourth operating mode, (i) operate the second power electronics and the third power electronics to provide power from the at least one battery pack to the first DC bus and (ii) operate the first power electronics to provide AC power from the first DC bus to an AC accessory connected to the power supply.

7. The power supply according to claim 6, wherein the controller is configured to automatically switch to the fourth operating mode in response to the power supply being connected to the AC accessory.

8. The power supply according to claim 6, wherein the AC accessory is a power tool.

9. The power supply according to claim 1, the controller being further configured to:
in a fifth operating mode, (i) operate the first power electronics to provide power from the AC power source to the first DC bus and (ii) operate the second power electronics and the third power electronics to provide power from the at least one battery pack to the first DC bus, at least one load of the device being provided with power from the first DC bus in the fifth operating mode.

10. The power supply according to claim 9, wherein the controller is configured to automatically switch to the fifth operating mode in response to a power requirement of the device exceeding a predetermined threshold while the power supply is connected to the AC power source.

11. The power supply according to claim 1, where the power supply is integrated with the device.

12. The power supply according to claim 1, wherein the first DC bus provides power to an electric motor of the device.

13. The power supply according to claim 1, wherein the device is a power tool.

14. The power supply according to claim 1, wherein the first power electronics include a bidirectional AC/DC converter configured to (i) provide power from the AC power source to the first DC bus by converting an AC voltage of the AC power source into the first DC voltage and (ii) provide power from the first DC bus to an AC accessory connected to the power supply by converting the first DC voltage from the first DC bus into an AC voltage.

15. The power supply according to claim 14, wherein the bidirectional AC/DC converter has a totem-pole power factor correction topology.

16. The power supply according to claim 1, wherein the second power electronics include a bidirectional DC/DC converter configured to (i) provide power from the second DC bus to the first DC bus by converting the second DC voltage of the second DC bus into the first DC voltage of the first DC bus and (ii) provide power from the first DC bus to the second DC bus by converting the first DC voltage of the first DC bus into the second DC voltage of the second DC bus.

17. The power supply according to claim 16, wherein the bidirectional DC/DC converter of the second power electronics is electrically isolated from the first DC bus and the second DC bus.

18. The power supply according to claim 1, wherein the third power electronics include at least one bidirectional DC/DC converter configured to (i) provide power from the at least one battery pack to the second DC bus by converting a DC voltage of the at least one battery pack into the second DC voltage of the second DC bus and (ii) provide power from the second DC bus to the at least one battery pack by converting the second DC voltage of the second DC bus into the DC voltage of the at least one battery pack.

19. A power supply for a device, the power supply comprising:
a direct-current (DC) bus having a first DC voltage, the device being configured to receive power from the DC bus;
first power electronics configured to provide power from an alternating-current (AC) power source to the DC bus;
second power electronics configured to provide power from at least one battery pack to the DC bus; and
a controller configured to:
in a first operating mode, operate the first power electronics to provide power from the AC power source to the DC bus, at least one load of the device being provided with power from the DC bus in the first operating mode; and
in a second operating mode, operate the second power electronics to provide power from the at least one battery pack to the DC bus, at least one load of the device being provided with power from the DC bus in the second operating mode.

20. A power tool comprising:
an electric motor configured to drive a tool;
a direct-current (DC) bus having a DC voltage, the electric motor being operably connected to receive power from the DC bus;
first power electronics configured to provide power from an alternating-current (AC) power source to the DC bus;
second power electronics configured to provide power from at least one battery pack to the DC bus; and
a controller configured to:
in a first operating mode, operate the first power electronics to provide power from the AC power source to the DC bus, the electric motor being provided with power from the DC bus in the first operating mode; and
in a second operating mode, operate the second power electronics to provide power from the at least one battery pack to the DC bus, the electric motor being provided with power from the DC bus in the second operating mode.
